# EUROPEAN PATENT APPLICATION

(11) **EP 3 327 991 A1**
(43) Date of publication of application: **30.05.2018**
(21) Application number: 16306569.1
(22) Date of filing: 29.11.2016
(51) Int. Cl.: H04L 12/24

(54) **STORAGE OF COVERAGE-RELATED INFORMATION OF A TELECOMMUNICATION NETWORK**

(71) Applicant: Alcatel Lucent, 91620 Nozay (FR)
(72) Inventor: ORLANDI, Barbara, 91620 NOZAY (FR); LAFRAGETTE, Jean-Luc, 91620 NOZAY (FR); NATARIANNI, Lionel, 91620 NOZAY (FR)
(74) Representative: Novagraaf Technologies

(57) **Abstract**

This invention relates to a method and an apparatus for managing a telecommunication network comprising a database (102) for storing information (100) gathered from entities available to the telecommunication network, said information including information of the network entities and information provided by measurements on said entities, said apparatus further comprising a converter (102) for converting the graph-based information into text format, adapted for text-based searches, and for storing the text-form-information into a repository (104).

## Description

### FIELD OF THE INVENTION

The invention relates to the management of telecommunications networks. More specifically, it relates to the storing of the various information to be managed inside the new generations of telecommunication network's architectures.

### BACKGROUND OF THE INVENTION

Nowadays, telecommunication network tends to be more and more abstracted so that applications and services can consider them as sets of resources in which they can choose the appropriate network functions, without considering the actual implementations on the underlying physical infrastructure.

Such an evolution is exemplified by the various proposals around the 5G architecture ("5^{th} generation") and specifically the concept of network slices. Network slices are currently under standardization at the ETSI (European Telecommunication Standards Institute) and aim in running multiple logical networks as virtually independent business operations on a common physical infrastructure.

This evolution enables the deployment of on-demand networks and services over the infrastructure, as well as to encompass various resources for the deployment of these on-demand networks and services. In other words, thanks to the abstraction, it becomes possible to consider not only the physical resources of the network operator, but also third-party resources which can be made available as "functions" to the services to be deployed.

Accordingly, the infrastructure has not only to handle the data of the operator's network but also of any resources connected to the network and which can be made available to the services. This includes notably access points provided by any entities connected to the network. For instance, a stadium can let its networking facilities available to the telecommunications operators, which can then use them to deploy their services, or letting them available for third parties (service providers...).

As a consequence, the number of network entities to be managed becomes much more important than for legacy networks. We can estimate to millions the number of access points, femto cells, and any other base stations worldwide, which can potentially be used for the deployment of a network service.

Furthermore, the information made available at measurement points is also growing dramatically. This includes technical data, provided dynamically by some network nodes, as well as crowd-sourced data (performance ratings, venue information gathered by devices using the Hotspot 2.0 standard, etc.). All this information may be useful to take into account to deploy a network service in an efficient way.

In the same time, the requirements for accessing this information are growing, since the deployment of on-demand services makes it mandatory to access to the information in real-time to meet the requests from the services.

It appears thus clearly that the network information cannot be managed like they were for legacy telecommunications networks.

### SUMMARY OF THE INVENTION

The object of the present invention is to alleviate at least partly the above mentioned drawbacks.

This object is achieved with a method for managing a telecommunication network comprising gathering information from entities available to the telecommunication network, said information including information of the network entities and information provided by measurements on said entities, said method further comprising the conversion of said information into text format, adapted for text-based searches.

Preferred embodiments comprise one or more of the following features, which can be taken separately or together, either in partial combination or in full combination.
- said information is organized as graphs wherein said entities are represented as nodes and coverage relationships between the respective entities inside the telecommunication network are represented by links, before conversion into text format;
- said conversion consists in converting every elements of said graph-based information into an inverted index;
- said conversion consists in converting said information into chains of characters representative of their semantic values;
- the converted information into text form is stored in an Elasticsearch infrastructure;
- said graph-based information is stored in Neo4J database;

Another object of the invention relates to a software product comprising instructions to perform the claim as previously defined, when run on a data-processing system.

Another object of the invention relates to an apparatus for managing a telecommunication network comprising a database for storing information gathered from entities available to the telecommunication network, said information including information of the network entities and information provided by measurements on said entities, said apparatus further comprising a converter for converting the graph-based information into text format, adapted for text-based searches, and for storing the text-form-information into a repository.

Preferred embodiments comprise one or more of the following features, which can be taken separately or together, either in partial combination or in full combination.
- said database is adapted for organizing said information is organized as graphs wherein said entities are represented as nodes and coverage relationships between the respective entities inside the telecommunication network are represented by links;
Another object of the invention relates to a telecommunication network comprising the apparatus as previously defined.

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows a functional view of the invention, according to an embodiment.
Fig. 2 depicts a high-level representation of a telecommunication network with its context.

### DETAILED DESCRIPTION OF THE INVENTION

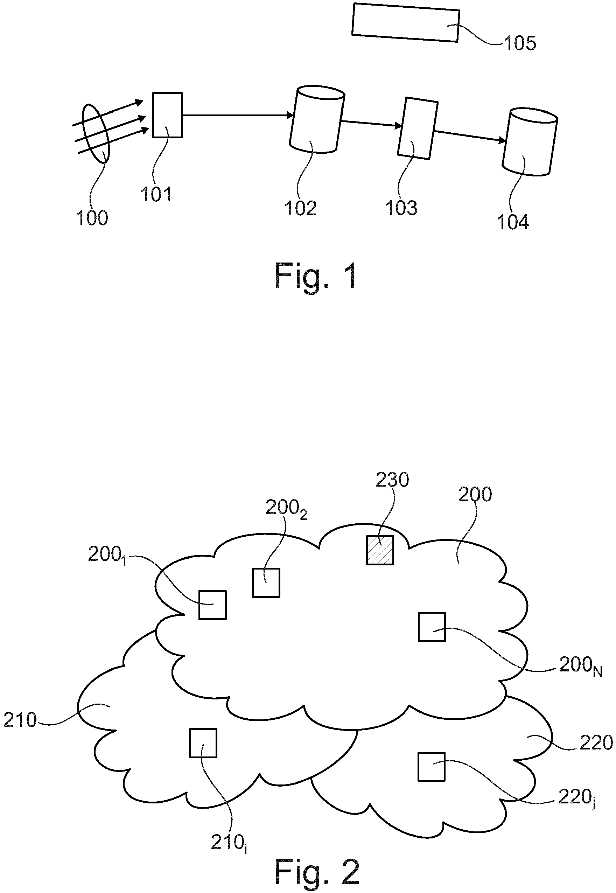

A functional view of an embodiment of the invention is depicted in figure 1. This representation is high-level and encompasses many different possible embodiments.

The method and apparatus according to the invention comprises gathering information from various entities connected to a telecommunication network.

As depicted in figure 2, a telecommunication network 200 may comprises several network nodes 200₁, 200₂...200ₙ (routers, switches, functional entities, billing elements, etc.),

To this telecommunication network 200, many other entities 210ᵢ, 220ⱼ may be connected, beholding for instance to access networks or other networking facilities, respectively 210, 220.

As mentioned in the background section, such a connected network 210, 220, may be associated to a large venue, like a stadium, a large concert hall, etc. which could own its own infrastructure and let it available for the operators of the telecommunication networks 200.

All these network nodes provides the operators with an extension of their coverages and capabilities, which they can offer to the services and to the end users.

The information regarding these network nodes can populate the database of a management system 230. This includes thus both the entities, or network nodes, directly composing the network 200 itself (i.e. 200₁, 200₂...200ₙ), but also the entities connected to the telecommunication network (i.e. 210ᵢ, 220ⱼ).

Thanks to abstraction mechanisms, the services (including virtual networks) can be deployed over all these network nodes, in a transparent way for the services: the abstraction management controllers are in charge in taking into account the information they have in the database to deploy in an efficient way the service, taking also into account its technical requirements over the most appropriate network nodes. They can also adapt this deployment "in real time", according to dynamic measurements they can get from the network nodes.

Accordingly, it is crucial for an efficient deployment of the services to gather as many information as possible from the network nodes. This involves that the database 230 may gather a huge number of information that need both to be stored and to be retrieved to meet the requests for deployment or adaptation of a service.

According to an embodiment of the invention, such information comprises:
- Information of the network nodes themselves, which can be provisioned at a registration step, wherein the owner of a network node (e.g. access node) registers it via a web-based interface or via a REST interface for bulk registration (case a);
- Information provided by measurement nodes, e.g. Wi-Fi sensors and crowd-sourced devices scans and ANQP queries of their respective neighborhoods (case b);
- Information provided by legacy operators' databases about deployed base stations, Wi-Fi hotspots, etc. (case c)

This information is stored in a two-fold data repository.

As depicted in figure 1, the information 100 is inputted in a database 102, and converted into text format, by a converter 103, and stored in a text-based data repository 104. The database allows persistency of the information within the management system, as well as to organize the information so as to provide added-value with regard to raw information, e.g. regarding the coverage of the access nodes available to the telecommunications network. For instance, the database may be adapted for organizing the information to capture the coverage relationships between respective entities.

Accordingly, the inputted information 100 is first handled by a graph generation function 101, in charge of generating graphs to capture the relationships between the entities available to the network, regarding their respective coverage.

In the database 102, then, the information is organized as graphs, wherein:
- the entities are represented as nodes, and
- coverage relationships between the entities are represented as links between the nodes.

However, other embodiments are possible to capture the relationships between the nodes, and the invention is not dependent of the graph-based structure that will be described here-below as a "best mode" of implementation.

According to embodiments of the invention, further types of information can be stored into such a graph-based structures. For instance, the data structure can comprise
- nodes that represent both an access point and a location: for instance a 4G cell or a Wi-Fi access point;
- nodes that represent a location only: for instance a tracking or location area, a PLMN, the postal address of a venue (shopping mall, stadium...), a cell from another operator, an access node that is not available but of which the location is known, etc.
- links representing coverage relationships between the nodes: for instance, a link may mean that a given access point is under the coverage of a given cell. Such a relation is oriented (meaning a node is the child of the parent node) and means "is under coverage".

Additional nodes may be considered. For instance, the measurements and performance evaluations of network entities can be represented by independent nodes linked as children of the node representing the respective entity.

Furthermore, some nodes can represent operator domains, realms, etc. Roaming agreements etc. can be represented by links between, for instance, a given action point and a realm meaning that this action point allows to reach the realm.

The database 102 can thus store heterogeneous information coming from technical sources like network nodes, etc., as well as human-generated information. There is in fact no bar to gather any type of information that may be available at a telecommunications network and to organize it along the graph structure described here-above.

According to an embodiment of the invention, this graph-based database is implemented using Neo4J. Neo4J is a graph database management system developed by Neo Technology Inc. it can be described as an ACID-compliant transactional database with native graph storage and processing. Its current implementation is Java-based. In a Neo4J implementation, the links between the nodes can be instantiated as "edges".

A second storage function 104 is provided to store information in text format converted from the database 102 by the converter 103. This text format is adapted for text-based searches, and can be provided to a search engine as input.

Such a mechanism allows reaching the performances for text-based searches but applied to heterogeneous telecommunications network data.

Moreover, the search can take benefit of parallel implementations over a distributed system, so as to reach scalability performance allowing to handle in real-time the huge amount of data stored in the database. Such a functionality is not feasible with relational databases.

A possible implementation consists in using the Elasticsearch. Elasticsearch is a search engine based on Lucene. It provides a distributed, multitenant-capable full-text search engine with an HTTP web interface and schema-free JSON documents. It can be used to search all kind of documents. It is distributed, which means that indices can be divided into shards and each shard can have zero or more replicas. Each node of the Elasticsearch infrastructure hosts one or more shards and acts as a coordinator to delegate operations to the correct shard(s).

However, other implementations are possible, making use of other search infrastructures than Elasticsearch, which maps the technical requirements of the invention.

The converter 103 is adapted for converting the graph-based data structure of the database 102 into text-formatted documents. Every such document sent to Elasticsearch is stored in a data structure called an inverted index.

An inverted index (also referred to as postings file or inverted file) is an index data structure storing a mapping from content, such as words or numbers, to its locations in a database file, or in a document or a set of documents (named in contrast to a Forward Index, which maps from documents to content). The purpose of an inverted index is to allow fast full text searches, at a cost of increased processing when a document is added to the database. The inverted index is a well-known concept, widely used for search engines.

The conversion itself can be embodied in several ways.

The conversion of the information of the network nodes, referred to as "case a" here above can be made in straightforward way, since this information may have been provided originally in text format by the owner of the network nodes. Metadata that may have been also provided in association with the technical information may also be considered and converted, directly, in the text format structure.

The conversion of information provided by measurements nodes (case b) or by legacy operators' database (case b) may be adapted to the type of information.

The conversion may also be such that the hetegeneity of the original information is erased by using a generic lexica for the generation of the textual information to be stored in the text-format repository 104. Furthermore, the search engine itself which will be executed in the repository 104 may have the appropriate lexical and semantic mechanisms to handle synonyms and semantic distance between generate terms. These mechanisms will appear cleared in view of the following examples:
In general, the different pieces of information can be converted into chains of characters representative of their semantic value.

In many cases, the semantic meaning of values which can be taken by the information can be defined by standardization documents.

For instance, IEEE access network types, as defined in table 8-174 of the standards document IEEE 802.11, can be converted by using the corresponding textual definition provided by the standards:
0 = private network
1 = private network with guest access
2 = chargeable public network

Etc.

Likewise, venue groups and types, e.g. as defined in tables 8-52 and 8-53 of the standard document 802.11, can be converted by using the corresponding textual definitions as follows:
(1,1) = (Assembly, Arena)
(1,2) = (Assembly, Stadium)
(2,8) = (Business, Research and Development Facility)
(7,2) = (Residential, Hotel or Motel)

As another example of numerical value converted to chains of characters, one can mention the EAP (Extensible Authentication Protocol) and its IANA-defined values:
21 = EAP-TTLS
23= EAP-AKA

Acronyms can also be translated into their definitions in textual format, but also to equivalent terms and definitions, in order to facilitate text-based searches.

For instance:
BSSID = Basic Service Set Identifier = HESSID = MAC address Orange = 20801 = SOSH = France

Performances measurements can also be converted into meaningful chains of characters, so as to enable searches based on meaning associated with the performances. For instance:
"Latency = 10ms" can be converted into "face recognition 5-star rating."

The raw value can also be stored so as to allow both kinds of searches, like:
"find access to build a network slice with access latency < 70ms"
"provide geographical coverage map where Netflix services have achieved at least 4-star rating in the last month"

These examples are provided to better clarify the possibilities for embodying the invention. They should not be understood as limiting features, and the man skilled-in-the art would design other examples and variations according to his specific needs and to the evolutions of the available networking technologies and terminologies.

Furthermore, each field in Elasticsearch can be processed by a set of powerful language analyzers, so that words such as BBSID and "MAC address" or "Basic Service Set identifier" can be treated as the same value in the index scoring the properties.

For example, if we include the "latency=10ms" sentence or "virtual function support enabled" sentence in a record, we may want to analyze them as "face recognition suitable". The following is a sample configuration allowing it:

```
    Curl-XPUT localhost:9200/my_index -d '{
     "settings" : {
        "analysis" : {
            "char_filter" : {
               "my_pattern" : {
                  "type": "pattern_replace",
                  "pattern":"latency<(*)10ms/virtual function support",
                  "replacement":"face recognition"
               }
            },
            "analyzer" : {
               "my_custom_analyzer" : {
                  "tokenizer" : "standard",
                  "filter" : ["lowercase"],
                  "char_filter" : ["my_pattern"]
                  }
               }
            }
        }
    }'
    {"acknowledged":true}
```

Thanks to the conversion and to the text-based storing, e.g. on a Elasticsearch platform, the network-related information can be searched in real-time without any problem of scalability due to the volume of information, especially in 5G telecommunication networks' context.

Furthermore, the structuring of the information, especially with regard to the coverages of each access entity, is kept within the database 102.

A controller 105 may also be provided to manage the graph-generation algorithms, the index creation algorithms, cluster and storage orchestration using APIs and REST interfaces.

The invention has been described with reference to preferred embodiments. However, many variations are possible within the scope of the invention.

## Claims

1. Method for managing a telecommunication network comprising gathering information from entities available to the telecommunication network, said information including information of the network entities and information provided by measurements on said entities, said method further comprising the conversion of said information into text format, adapted for text-based searches.

2. Method according to the previous claim, wherein said information is organized as graphs wherein said entities are represented as nodes and coverage relationships between the respective entities inside the telecommunication network are represented by links, before conversion into text format.

3. Method according to any of the previous claims, wherein said conversion consists in converting every elements of said graph-based information into an inverted index

4. Method according to any of the previous claims, wherein said conversion consists in converting said information into chains of characters representative of their semantic values

5. Method according to any of the previous claims, wherein the converted information into text form is stored in an Elasticsearch infrastructure.

6. Method according to any of the previous claims, wherein said graph-based information is stored in Neo4J database.

7. Software product comprising instructions to perform the claim according to any of the previous claims when run on a data-processing system.

8. Apparatus for managing a telecommunication network comprising a database (102) for storing information (100) gathered from entities available to the telecommunication network, said information including information of the network entities and information provided by measurements on said entities, said apparatus further comprising a converter (102) for converting the graph-based information into text format, adapted for text-based searches, and for storing the text-form-information into a repository (104).

9. Apparatus according to the previous claim, wherein said database is adapted for organizing said information is organized as graphs wherein said entities are represented as nodes and coverage relationships between the respective entities inside the telecommunication network are represented by links.

10. Telecommunication network comprising the apparatus according to any of claims 8 to 9.

## Amended claims

### Amended claims in accordance with Rule 137(2) EPC.

1. Method for managing a telecommunication network comprising gathering information from entities available to the telecommunication network, said information including information of the network entities and information provided by measurements on said entities, said method further comprising the conversion of said information into text format, adapted for text-based searches.

2. Method according to the previous claim, wherein said information is organized as graphs wherein said entities are represented as nodes and coverage relationships between the respective entities inside the telecommunication network are represented by links, before conversion into text format.

3. Method according to any of the previous claims, wherein said conversion consists in converting every elements of said graph-based information into an inverted index

4. Method according to any of the previous claims, wherein said conversion consists in converting said information into chains of characters representative of their semantic values

5. Method according to any of the previous claims, wherein the converted information into text form is stored in an Elasticsearch infrastructure.

6. Method according to any of the previous claims, wherein said graph-based information is stored in Neo4J database.

7. Computer program product comprising instructions to perform the claim according to any of the previous claims when run on a data-processing system.

8. Apparatus for managing a telecommunication network comprising a database (102) for storing information (100) gathered from entities available to the telecommunication network, said information including information of the network entities and information provided by measurements on said entities, said apparatus further comprising a converter (102) for converting the graph-based information into text format, adapted for text-based searches, and for storing the text-form-information.

9. Apparatus according to the previous claim, wherein said database is adapted for organizing said information is organized as graphs wherein said entities are represented as nodes and coverage relationships between the respective entities inside the telecommunication network are represented by links.

10. Telecommunication network comprising the apparatus according to any of claims 8 to 9.
